# EUROPEAN PATENT APPLICATION

(11) **EP 4 135 424 A1**
(43) Date of publication of application: **15.02.2023**
(21) Application number: 21795776.0
(22) Date of filing: 19.04.2021
(51) Int. Cl.: H04W 56/00, H04W 74/08

(54) **COMMUNICATION METHOD, APPARATUS AND SYSTEM**

(30) Priority: 28.04.2020 CN 202010351593
(71) Applicant: Huawei Technologies Co., Ltd., Longgang District, Shenzhen, Guangdong 518129 (CN)
(72) Inventor: DENG, Ailin, Shenzhen, Guangdong 518129 (CN); ZENG, Lijun, Shenzhen, Guangdong 518129 (CN); XIONG, Bo, Shenzhen, Guangdong 518129 (CN); HONG, Jinsong, Shenzhen, Guangdong 518129 (CN)
(74) Representative: Thun, Clemens
(86) International application number: PCT/CN2021/088117
(87) International publication number: WO 2021/218682

(57) **Abstract**

Embodiments of this application provide a communication method, an apparatus, and a system. The method includes: A proxy base station receives a MSG1 from a user equipment. The proxy base station sends a MSG2 to the user equipment in response to the MSG1, where the MSG2 includes a timing advance, and the timing advance is determined based on at least one of an internal processing delay of a signal extension system and a delay between the signal extension system and a signal source base station. Based on this solution, after the signal extension system is introduced, the proxy base station sends the correct timing advance to the user equipment, so that the user equipment can complete time synchronization with the signal source base station based on the timing advance, and normal communication between the user equipment and the signal source base station is ensured.

## Description

### CROSS-REFERENCE TO RELATED APPLICATIONS

This application claims priority to Chinese Patent Application No. 202010351593.1, filed with the China National Intellectual Property Administration on April 28, 2020 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, an apparatus, and a system.

### BACKGROUND

In a process of communication between a signal source base station and a user equipment, because there is a specific distance between the signal source base station and the user equipment, there is a specific delay in signal or data transmission between the signal source base station and the user equipment. To offset the delay, in a random access process of the terminal device, the signal source base station measures the delay between the signal source base station and the user equipment based on a physical random access channel (Physical Random Access Channel, PRACH), and then indicates the user equipment to adjust, based on the delay, a timing advance (Time Advance, TA) for uplink sending. In other words, sending of uplink data or an uplink signal is advanced by the terminal device by a specific period of time based on the timing advance.

Because coverage of the signal source base station is limited, to increase a signal transmission distance of the signal source base station, the signal transmission distance may usually be extended by using a signal extension system (for example, a digital indoor distributed system, a repeater, or a digital distributed antenna system (distributed antenna system, DAS)). The digital indoor distributed system is used as an example. After the digital indoor distributed system is introduced between the user equipment and the signal source base station, a signal of the signal source base station first arrives at the digital indoor distributed system, and then the digital indoor distributed system performs internal processing (for example, digital-to-analog conversion of the signal) on the signal, and transmits a processed signal to the user equipment. An advantage of introducing the digital indoor distributed system is that the signal transmission distance of the signal source base station can be extended, so that the signal of the signal source base station can be cover a larger range. All-digital transmission is used in digital indoor distribution, so that a radiofrequency cable loss is avoided, a longer distance can be supported, and a higher signal-to-noise ratio can be obtained.

After the digital indoor distributed system is introduced, an extra delay is introduced due to the internal processing of the digital indoor distributed system, node conversion, an optical fiber distance, and the like. The delay is equivalent to an air interface propagation delay for the signal source base station.

After the signal extension system is introduced, how to notify the user equipment of the correct timing advance for uplink sending is a problem that currently needs to be resolved.

### SUMMARY

Embodiments of this application provide a communication method, an apparatus, and a system, to send a correct timing advance to a user equipment, and ensure normal communication between the user equipment and a signal source base station.

According to a first aspect, an embodiment of this application provides a communication method, including: A proxy base station receives a MSG1 from a user equipment. The proxy base station sends a MSG2 to the user equipment in response to the MSG1, where the MSG2 includes a timing advance, and the timing advance is determined based on at least one of an internal processing delay of a signal extension system and a delay between the signal extension system and a signal source base station.

Based on the foregoing solution, after the signal extension system is introduced, the proxy base station sends the correct timing advance to the user equipment, so that the user equipment can complete time synchronization with the signal source base station based on the timing advance, and normal communication between the user equipment and the signal source base station is ensured.

In a possible implementation method, before the proxy base station receives the MSG1 from the user equipment, the proxy base station receives a scrambling identifier and a key radio resource control RRC information element from a proxy device, where the scrambling identifier and the key RRC information element are from the signal source base station, and the scrambling identifier is a cell radio network temporary identifier C-RNTI or a temporary cell radio network temporary identifier TC-RNTI. The MSG2 further includes the scrambling identifier. After the proxy base station sends the MSG2 to the user equipment, the proxy base station receives a MSG3 from the user equipment; and the proxy base station sends a MSG4 to the user equipment in response to the MSG3, where the MSG4 includes the key RRC information element.

The foregoing solution may be applied to an application scenario in which a user equipment in RRC idle mode initiates contention-based random access, so that the user equipment can complete the time synchronization with the signal source base station based on the timing advance, and normal communication between the user equipment and the signal source base station is ensured.

In a possible implementation method, before the proxy base station receives the MSG1 from the user equipment, the proxy base station receives a scrambling identifier from a proxy device, where the scrambling identifier is from the signal source base station, and the scrambling identifier is a C-RNTI or a TC-RNTI. The MSG2 further includes the scrambling identifier. After the proxy base station sends the MSG2 to the user equipment, the proxy base station receives a MSG3 from the user equipment, where the MSG3 includes a first medium access control MAC service data unit SDU; the proxy base station sends a first message to the proxy device, where the first message includes the first MAC SDU, and the first message indicates the proxy device to initiate random access to the signal source base station based on the first MAC SDU; the proxy base station receives a second MAC SDU from the user equipment, where the second MAC SDU is from the signal source base station; and the proxy base station sends a MSG4 to the user equipment, where the MSG4 includes the second MAC SDU.

The foregoing solution may be applied to an application scenario in which a user equipment in RRC connected mode initiates contention-based random access, so that the user equipment can complete the time synchronization with the signal source base station based on the timing advance, and normal communication between the user equipment and the signal source base station is ensured.

In a possible implementation method, the first message further includes first indication information. That the first message indicates the proxy device to initiate random access to the signal source base station based on the first MAC SDU includes: The first indication information indicates the proxy device to initiate the random access to the signal source base station based on the first MAC SDU.

In a possible implementation method, the MSG1 includes a random access preamble. After the proxy base station sends the MSG2 to the user equipment, the proxy base station sends a second message to a proxy device, where the second message includes the random access preamble, and the second message indicates the proxy device to initiate random access to the signal source base station based on the random access preamble.

In a possible implementation method, the second message further includes second indication information. That the second message indicates the proxy device to initiate random access to the signal source base station based on the random access preamble includes: The second indication information indicates the proxy device to initiate the random access to the signal source base station based on the random access preamble.

The foregoing solution may be applied to an application scenario in which a user equipment in RRC connected mode initiates contention-free random access, so that the user equipment can complete the time synchronization with the signal source base station based on the timing advance, and normal communication between the user equipment and the signal source base station is ensured.

In a possible implementation method, the proxy base station and the proxy device are integrated into a same board, and the board is coupled to the signal extension system; the proxy base station and the proxy device are respectively integrated into two boards, and the two boards are separately coupled to the signal extension system; or the proxy base station and the proxy device each are a hardware module independent of the signal extension system, and the proxy base station and the proxy device separately communicate with the signal extension system in a wired or wireless connection manner.

In a possible implementation method, the signal extension system is a digital indoor distributed system, a repeater, or a digital DAS.

According to a second aspect, an embodiment of this application provides a communication method, including: A user equipment sends a MSG1 to a proxy base station. The user equipment receives a MSG2 from the proxy base station, where the MSG2 includes a timing advance, and the timing advance is determined based on at least one of an internal processing delay of a signal extension system and a delay between the signal extension system and a signal source base station.

Based on the foregoing solution, after the signal extension system is introduced, the proxy base station sends the correct timing advance to the user equipment, so that the user equipment can complete time synchronization with the signal source base station based on the timing advance, and normal communication between the user equipment and the signal source base station is ensured.

In a possible implementation method, the MSG2 further includes a C-RNTI. After the user equipment receives the MSG2 from the proxy base station, the user equipment sends a MSG3 to the proxy base station; and the user equipment receives a MSG4 from the proxy base station, where the MSG4 includes a key RRC information element.

In a possible implementation method, after the user equipment receives the MSG4 from the proxy base station, the user equipment sends a MSG5 to the signal source base station by using the signal extension system.

In a possible implementation method, the signal extension system is a digital indoor distributed system, a repeater, or a digital DAS.

According to a third aspect, an embodiment of this application provides a communication apparatus. The apparatus may be a proxy base station, or may be a chip used in the proxy base station. The apparatus has a function of implementing the first aspect or any implementation method of the first aspect. The function may be implemented by using hardware, or may be implemented by the hardware executing corresponding software. The hardware or the software includes one or more modules corresponding to the function.

According to a fourth aspect, an embodiment of this application provides a communication apparatus. The apparatus may be a user equipment, or may be a chip used in the user equipment. The apparatus has a function of implementing the second aspect or any implementation method of the second aspect. The function may be implemented by using hardware, or may be implemented by the hardware executing corresponding software. The hardware or the software includes one or more modules corresponding to the function.

According to a fifth aspect, an embodiment of this application provides a communication apparatus, including a processor and a memory. The memory is configured to store computer-executable instructions. When the apparatus runs, the processor executes the computer-executable instructions stored in the memory, so that the apparatus performs any method in the first aspect, the second aspect, and the implementation methods of the first aspect and the second aspect.

According to a sixth aspect, an embodiment of this application provides a communication apparatus, including a processor and an interface circuit. The processor is configured to communicate with another apparatus by using the interface circuit, and perform any method in the first aspect, the second aspect, and the implementation methods of the first aspect and the second aspect. There are one or more processors.

According to a seventh aspect, an embodiment of this application provides a communication apparatus, including a processor. The processor is configured to be connected to a memory, and invoke a program stored in the memory, to perform any method in the first aspect, the second aspect, and the implementation methods of the first aspect and the second aspect. The memory may be located inside or outside the apparatus. In addition, there are one or more processors.

According to an eighth aspect, an embodiment of this application further provides a computer-readable storage medium. The computer-readable storage medium stores instructions. When the instructions are run on a computer, a processor is enabled to perform any method in the first aspect, the second aspect, and the implementation methods of the first aspect and the second aspect.

According to a ninth aspect, an embodiment of this application further provides a computer program product. The computer product includes a computer program. When the computer program is run, any method in the first aspect, the second aspect, and the implementation methods of the first aspect and the second aspect is enabled to be performed.

According to a tenth aspect, an embodiment of this application further provides a chip system, including a processor. The processor is configured to perform any method in the first aspect, the second aspect, and the implementation methods of the first aspect and the second aspect.

According to an eleventh aspect, an embodiment of this application further provides a communication system, including a proxy base station and a proxy device. The proxy device is a device that replaces a user equipment to initiate random access to a signal source base station. The proxy base station is configured to: receive a MSG1 from the user equipment; and send a MSG2 to the user equipment in response to the MSG1, where the MSG2 includes a timing advance, and the timing advance is determined based on at least one of an internal processing delay of a signal extension system and a delay between the signal extension system and the signal source base station.

### BRIEF DESCRIPTION OF DRAWINGS

FIG. 1 is a schematic diagram of a network architecture to which an embodiment of this application is applicable;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic diagram of a communication apparatus according to an embodiment of this application;
FIG. 7 is a schematic diagram of another communication apparatus according to an embodiment of this application;
FIG. 8 is a schematic diagram of a proxy base station according to an embodiment of this application; and
FIG. 9 is a schematic diagram of a user equipment according to an embodiment of this application.

### DESCRIPTION OF EMBODIMENTS

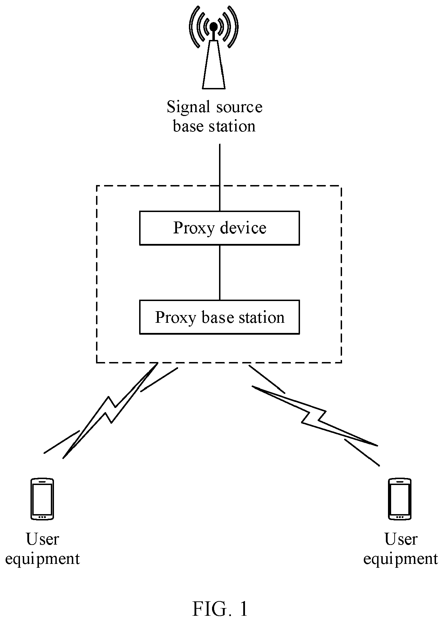

FIG. 1 is a schematic diagram of a network architecture to which an embodiment of this application is applicable. The network architecture includes a signal source base station, a proxy device, a proxy base station, and user equipments. There may be one or more user equipments. There is a direct connection or an indirect connection between the proxy device and the signal source base station, there is a direct connection or an indirect connection between the proxy device and the proxy base station (through a digital interface or an analog interface), there is a direct connection or an indirect connection between the proxy base station and the user equipment, and there is a direct connection or an indirect connection between the user equipment and the signal source base station.

In an implementation method, a baseband processing unit may be added to a signal extension system (for example, a digital indoor distributed system, a repeater, or a digital DAS system), where the baseband processing unit may implement functions of the proxy base station and the proxy device. Alternatively, two baseband processing units are added to respectively implement functions of the proxy base station and the proxy device.

In another implementation method, the proxy base station and the proxy device may alternatively be independent hardware modules or devices. In addition, the proxy base station and the proxy device may interact and communicate with a signal extension system, for example, separately communicate with the signal extension system in a wired or wireless connection manner.

The signal source base station is a base station that serves as a radio frequency signal source to feed in a signal. The signal source base station includes but is not limited to: a next generation NodeB (gNodeB, gNB) in fifth generation (5th generation, 5G), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU), a transmission reception point (transmitting and receiving point, TRP), a transmission point (transmitting point, TP), a mobile switching center, and the like.

The proxy device may replace the user equipment to initiate a random access procedure to the signal source base station.

The proxy base station may replace the signal source base station to respond to the random access procedure initiated by the user equipment. The random access procedure includes at least processing of a MSG1 (or a random access preamble (preamble)) and a MSG2 (or a random access response).

The user equipment is a device that has a wireless transceiver function. The user equipment may be deployed on land, and includes an indoor or outdoor device, a handheld device, or a vehicle-mounted device; may be deployed on water (for example, on a ship); or may be deployed in the air (for example, on an aircraft, a balloon, and a satellite). The user equipment may be a mobile phone (mobile phone), a tablet (pad), a computer having the wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in a telemedicine (remote medical), a wireless terminal in a smart grid (smart grid), a wireless terminal in transportation safety (transportation safety), a wireless terminal in a smart city (smart city), a wireless terminal in a smart home (smart home), and the like.

A contention-based random access process includes a message 1 (message 1, MSG1), a message 2 (message 2, MSG2), a message 3 (message 3, MSG3), and a message 4 (message 4, MSG4). A contention-free random access process includes the MSG1 and the MSG2.

In embodiments of this application, the MSG1 is sent by a terminal device to a proxy base station, sent by a proxy device to a signal source base station, or sent by the terminal device to the signal source base station, and is for sending a random access preamble (preamble).

After receiving the MSG1, the signal source base station or the proxy base station sends a random access response (Random Access Response, RAR) to the MSG1, where the RAR is the MSG2. Specifically, the signal source base station or the proxy base station blindly detects the preamble on a physical random access channel (Physical Random Access Channel, PRACH). If the signal source base station or the proxy base station obtains the preamble through detection, the signal source base station or the proxy base station subsequently feeds back the random access response on a physical downlink shared channel (Physical Downlink Shared CHannel, PDSCH) within a random access response window.

The contention-based random access process further includes the MSG3 and the MSG4. After receiving the MSG2, the user equipment or the proxy device may obtain uplink synchronization based on the MSG2, and transmit the MSG3 on an uplink resource allocated by the signal source base station or the proxy base station, to perform data transmission subsequently. After receiving the MSG3, the signal source base station or the proxy base station sends the MSG4 for the MSG3, where the MSG4 carries a radio resource control (Radio Resource Control, RRC) information element.

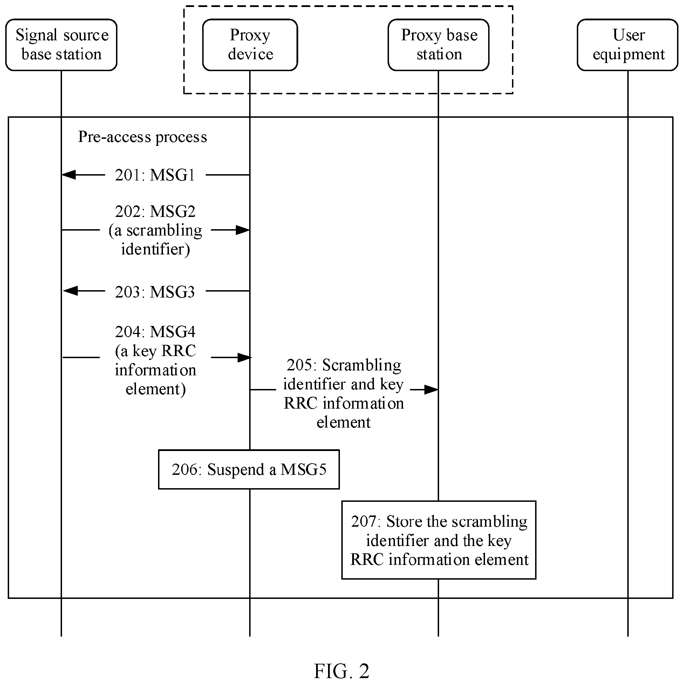

FIG. 2 is a schematic diagram of a communication method according to an embodiment of this application. The method may be referred to as a pre-access process.

In the pre-access process, before a user equipment initiates random access to a proxy base station, the proxy base station may obtain a scrambling identifier (for example, a cell radio network temporary identifier (Cell Radio Network Temporary Identifier, C-RNTI) or a temporary cell radio network temporary identifier (temporary Cell Radio Network Temporary Identifier, TC-RNTI)) and a key RRC information element from a signal source base station by using the proxy device, so that when the user equipment formally initiates the random access to the proxy base station, the proxy base station can quickly respond to the user equipment based on the scrambling identifier and key RRC information element that have been obtained. This reduces a delay of a random access process of the user equipment.

The pre-access process includes the following steps.

Step 201: The proxy device sends a MSG1 to the signal source base station, where the MSG1 includes a random access preamble (Random Access Preamble).

In this embodiment of this application, the random access preamble (Random Access Preamble) may also be referred to as a preamble for short. This is uniformly described herein. Details are not described again subsequently.

A preamble set is generated by a physical layer. RRC on a signal source base station side allocates some or all preamble index values for contention-based random access, and broadcasts the index values to the proxy device via system information.

A PRACH physical channel resource (for example, a quantity and time-frequency positions of PRACHs) required for random access of the proxy device is also broadcast by the signal source base station to the proxy device via a system message.

Step 202: The signal source base station sends a MSG2 to the proxy device, that is, sends a random access response (RAR).

The signal source base station blindly detects the preamble on a PRACH. If the signal source base station obtains the preamble through detection, the signal source base station feeds back the random access response on a PDSCH within a random access response window subsequently.

The MSG2 includes at least the scrambling identifier. Optionally, the MSG2 may further include another parameter such as a random access radio network temporary identifier (Random Access Radio Network Temporary Identifier, RA-RNTI).

Step 203: The proxy device sends a MSG3, namely, the first uplink scheduled transmission, to the signal source base station.

The proxy device may obtain uplink synchronization based on the MSG2, and transmit the MSG3 on an uplink resource allocated by the signal source base station to the proxy device, to perform data transmission subsequently.

Step 204: The signal source base station sends a MSG4 to the proxy device, where the MSG4 carries the key RRC information element.

The key RRC information element includes but is not limited to one or more of the following: rrc-TransactionIdentifier and rrcSetup.

Step 205: The proxy device sends the scrambling identifier and the key RRC information element to the proxy base station.

In another implementation, the proxy device may alternatively send the scrambling identifier to the proxy base station after step 202, and send the key RRC information element to the proxy base station after step 204.

Step 206: The proxy device suspends a MSG5.

The MSG5 triggers interaction between the proxy device and a core network and user-level NG interface interaction between the signal source base station and an access and mobility management function (Access and Mobility Management Function, AMF) network element, and these interaction processes depend on participation of a universal subscriber identity module (Universal Subscriber Identity Module, USIM) of the user equipment. However, because the proxy device cannot obtain a USIM card of the user equipment, the proxy device cannot complete the interaction with the core network. Therefore, the proxy device does not send the MSG5 to the signal source base station, but the user equipment sends the MSG5 to the signal source base station in a formal access process subsequently. That is, the proxy device suspends the MSG5.

Step 207: The proxy base station stores the scrambling identifier and the key RRC information element.

The scrambling identifier and the key RRC information element are stored in the proxy base station as a group of resources.

Through step 201 to step 207, the proxy base station and the proxy device may complete the pre-access process. In the process, the proxy base station may obtain the group of resources, namely, the scrambling identifier and the key RRC information element, so that when the user equipment formally accesses the proxy base station subsequently, the proxy base station can use the group of resources for a quick response.

During actual application, because a plurality of user equipments may simultaneously initiate random access at a same time point or in a same time period, to satisfy a requirement of simultaneously initiating the random access by the plurality of user equipments, the proxy base station may execute the pre-access process N times, to obtain N groups of resources and store the N groups of resources in a resource pool. N is an integer greater than 1. In this way, when a plurality of users initiate the random access at the same time point or in the same time period, the proxy base station may allocate one group of resources from the resource pool to each user equipment, where each group of resources includes one scrambling identifier and one key RRC information element.

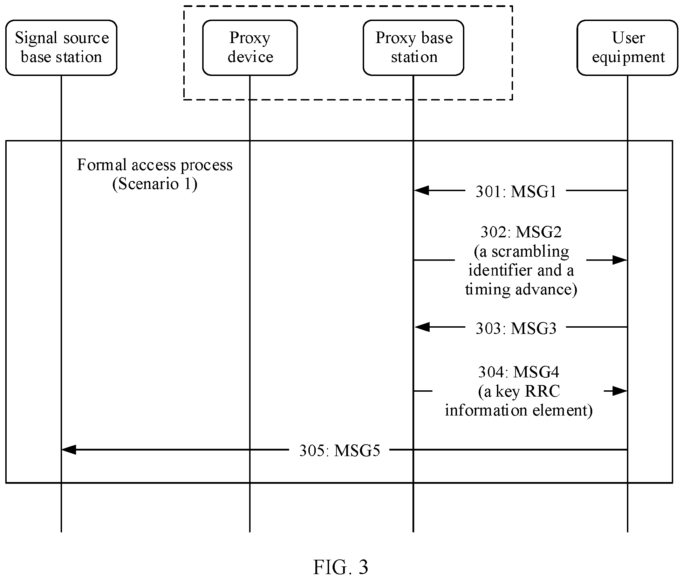

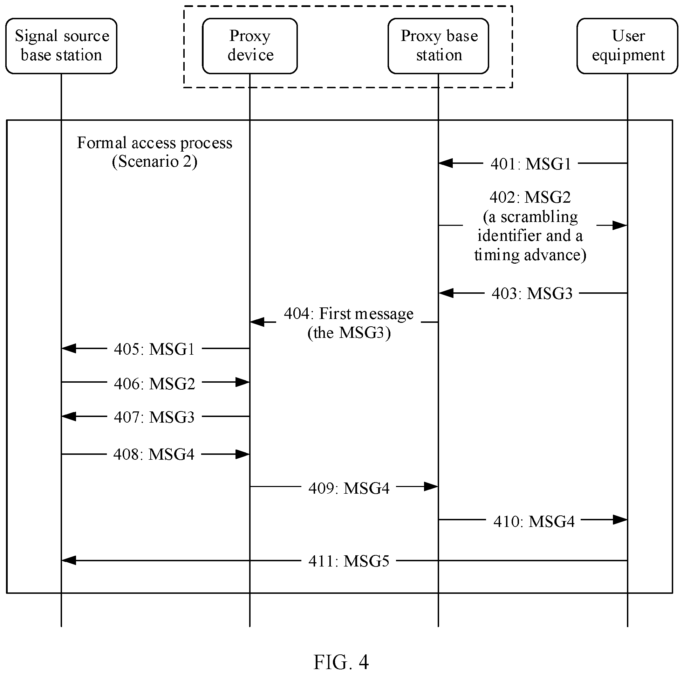

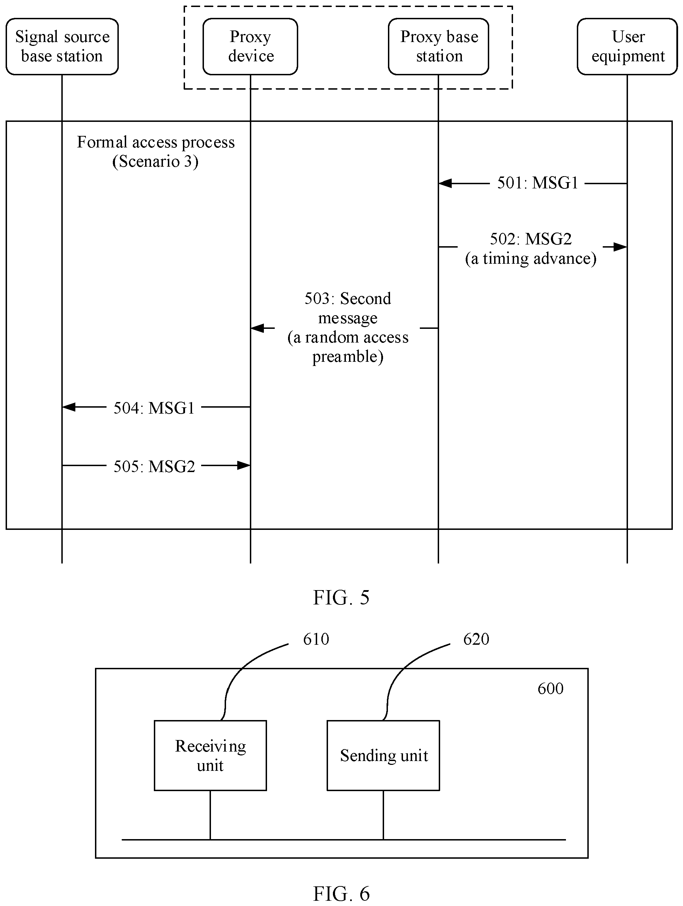

After the pre-access process, the user equipment may formally initiate the random access, that is, enter the formal access process. It should be noted that, in the formal access process, information in the information obtained by the proxy base station in the pre-access process may be used (for example, Scenario 1 corresponding to FIG. 3 and Scenario 2 corresponding to FIG. 4 below), or the information obtained by the proxy base station in the pre-access process may not be used (for example, Scenario 3 corresponding to FIG. 5 below).

The following provides specific descriptions with reference to three different application scenarios.

FIG. 3 is a schematic diagram of another communication method according to an embodiment of this application. The method is applied to an application scenario in which a user equipment in RRC idle mode initiates contention-based random access.

In a formal access process, the user equipment initiates the random access to a proxy base station. The proxy base station interacts with the user equipment based on a scrambling identifier and a key RRC information element that are obtained in a pre-access process, and sends a timing advance to the user equipment in the process.

In this scenario, the formal access process of the user equipment includes the following steps.

Step 301: The user equipment sends a MSG1 to the proxy base station, where the MSG1 includes a random access preamble (Random Access Preamble).

A preamble set is generated by a physical layer. RRC on a signal source base station side allocates some or all preamble index values for the contention-based random access, and broadcasts the index values to the user equipment via system information.

APRACH physical channel resource (for example, a quantity and time-frequency positions of PRACHs) required for the random access of the user equipment is also broadcast by a signal source base station to the user equipment via a system message.

Step 302: The proxy base station sends a MSG2 to the user equipment, that is, sends a random access response (RAR).

The proxy base station blindly detects the preamble on a PRACH. If the proxy base station obtains the preamble through detection, the proxy base station feeds back the random access response on a PDSCH within a random access response window subsequently.

The MSG2 includes at least the scrambling identifier and the timing advance.

The scrambling identifier is obtained from the signal source base station and stored in a resource pool by the proxy base station in the pre-access process. That is, the proxy base station obtains the scrambling identifier from the resource pool.

The timing advance is determined by the proxy base station based on one or more of a delay (which is referred to as a first delay below) between the signal source base station and a signal extension system, an internal processing delay (which is referred to as a second delay below) of the signal extension system, and a delay (which is referred to as a third delay below) between the signal extension system and the user equipment. For example, when the third delay is less than the first delay or the second delay, and is negligible, the proxy base station may determine the timing advance based on the first delay and the second delay. For another example, when the first delay is less than the second delay or the third delay, and is negligible, the proxy base station may determine the timing advance based on the second delay and the third delay. In other words, if one or two of the delays are negligible, the proxy base station may not refer to the one or two delays when determining the timing advance.

In an implementation method, the first delay may be determined during networking, or obtained by a proxy device through measurement based on a received downlink signal timing deviation of the signal source base station and then sent by the proxy device to the proxy base station.

In an implementation method, the second delay or a sum of the second delay and the third delay may be obtained by the proxy base station through measurement based on an uplink signal timing deviation of the user equipment.

The user equipment sends uplink data or uplink signaling in advance based on the timing advance, to offset a delay between the user equipment and a source base station, and implement time synchronization between the user equipment and the signal source base station.

Step 303: The user equipment sends a MSG3, namely, the first uplink scheduled transmission, to the proxy base station.

The user equipment may obtain uplink synchronization based on the timing advance in the MSG2, and transmit the MSG3 on an uplink resource allocated by the proxy base station to the user equipment, to perform data transmission subsequently.

Step 304: The proxy base station sends a MSG4 to the user equipment, where the MSG4 carries the key RRC information element.

The key RRC information element is obtained from the signal source base station and stored in the resource pool by the proxy base station in the pre-access process. That is, the proxy base station obtains the key RRC information element from the resource pool. It should be noted that the key RRC information element and the scrambling identifier in step 302 belong to a same group of resources.

Step 305: The user equipment sends a MSG5 to the signal source base station.

The MSG5 from the user equipment needs to pass through the signal extension system, is not processed in the signal extension system, and is directly transparently transmitted to the signal source base station. The foregoing procedure after suspending of the MSG5 may proceed.

Based on the foregoing solution, after the signal extension system is introduced, the proxy base station sends the correct timing advance to the user equipment, so that the user equipment can complete the time synchronization with the signal source base station based on the timing advance, and normal communication between the user equipment and the signal source base station is ensured.

FIG. 4 is a schematic diagram of another communication method according to an embodiment of this application. The method is applied to an application scenario in which a user equipment in RRC connected mode initiates contention-based random access.

In a formal access process, the user equipment initiates the random access to a proxy base station. RRC in a MSG3 to a MSG5 may be encrypted. Therefore, a proxy device cannot send the MSG3 to the MSG5 in advance. In addition, the proxy base station may send a timing advance to the user equipment via a MSG2.

In this scenario, the formal access process of the user equipment includes the following steps.

Step 401: The user equipment sends a MSG1 to the proxy base station, where the MSG1 includes a random access preamble (Random Access Preamble).

A preamble set is generated by a physical layer. RRC on a signal source base station side allocates some or all preamble index values for the contention-based random access, and broadcasts the index values to the user equipment via system information.

APRACH physical channel resource (for example, a quantity and time-frequency positions of PRACHs) required for the random access of the user equipment is also broadcast by a signal source base station to the user equipment via a system message.

Step 402: The proxy base station sends the MSG2 to the user equipment, that is, sends a random access response (RAR).

The proxy base station blindly detects the preamble on a PRACH. If the proxy base station obtains the preamble through detection, the proxy base station feeds back the random access response on a PDSCH within a random access response window subsequently.

The MSG2 includes at least a scrambling identifier and the timing advance.

The scrambling identifier is obtained from the signal source base station and stored in a resource pool by the proxy base station in a pre-access process. That is, the proxy base station obtains the scrambling identifier from the resource pool.

For a definition of the timing advance and a method for determining the timing advance, refer to the related descriptions of step 302 in the embodiment corresponding to FIG. 3. Details are not described again.

The user equipment sends uplink data or uplink signaling in advance based on the timing advance, to offset a delay between the user equipment and a source base station, and implement time synchronization between the user equipment and the signal source base station.

Step 403: The user equipment sends a MSG3, namely, the first uplink scheduled transmission, to the proxy base station.

The user equipment may obtain uplink synchronization based on the timing advance in the MSG2, and transmit the MSG3 on an uplink resource allocated by the proxy base station to the user equipment, to perform data transmission subsequently.

Step 404: The proxy base station sends a first message to the proxy device, where the first message includes the MSG3.

After receiving the MSG3, the proxy base station determines that the MSG3 is encrypted. Therefore, the proxy base station sends the MSG3 to the proxy device via the first message. The first message may further indicate that the user equipment initiates the random access. For example, if the MSG3 in step 403 carries a medium access control control element (medium access control control element, MAC CE), and the MCE carries a scrambling identifier, the proxy base station determines, based on the scrambling identifier carried in the MAC CE, that the user equipment is in RRC connected mode. Therefore, the MSG3 is encrypted.

In an implementation method, that the first message indicates that the user equipment initiates the random access specifically includes: The first message itself may indicate that the user equipment initiates the random access. For example, a name of the first message may indicate that the user equipment initiates the random access. In another implementation method, that the first message indicates that the user equipment initiates the random access specifically includes: The first message includes first indication information, and the first indication information indicates that the user equipment initiates the random access.

Further, the proxy base station may further start a timer, and the proxy base station needs to receive a MSG4 from the signal source base station and send the MSG4 to the user equipment before the timer expires. That is, if the timer expires, the proxy base station does not send the MSG4 to the user equipment. The timer may be referred to as, for example, an ra-ContentionResolutionTimer.

The MSG3 in step 404 is the same as the MSG3 in step 403.

Step 405: The proxy device sends a MSG1 to the signal source base station, where the MSG1 includes the random access preamble (Random Access Preamble).

The preamble set is generated by the physical layer. The RRC on the signal source base station side allocates the some or all preamble index values for the contention-based random access, and broadcasts the index values to the proxy device via system information.

APRACH physical channel resource (for example, a quantity and time-frequency positions of PRACHs) required for random access of the proxy device is also broadcast by the signal source base station to the proxy device via a system message.

Step 406: The signal source base station sends a MSG2 to the proxy device, that is, sends a random access response.

The signal source base station blindly detects the preamble on a PRACH. If the signal source base station obtains the preamble through detection, the signal source base station feeds back the random access response on a PDSCH within a random access response window subsequently.

Step 407: The proxy device sends a MSG3, namely, the first uplink scheduled transmission, to the signal source base station.

The proxy device may obtain uplink synchronization based on the MSG2, and transmit the MSG3 on an uplink resource allocated by the signal source base station to the proxy device, to perform data transmission subsequently.

A relationship between the MSG3 in step 407 and the MSG3 in step 404 is that a medium access control (medium access control, MAC) service data unit (service data unit, SDU) in the MSG3 in step 407 is the same as a MAC SDU in the MSG3 in step 404. A reason is the proxy base station cannot parse the MAC SDU in the MSG3 in step 403, and therefore may send the MAC SDU to the signal source base station via the user equipment, and the signal source base station parses the MAC SDU and returns the MSG4.

Step 408: The signal source base station sends the MSG4 to the proxy device.

The MSG4 is encrypted.

Step 409: The proxy device sends the MSG4 to the proxy base station.

The MSG4 in step 409 is the same as the MSG4 in step 408.

Step 410: The proxy base station sends a MSG4 to the user equipment.

A relationship between the MSG4 in step 410 and the MSG4 in step 409 is that a MAC SDU in the MSG4 in step 410 is the same as a MAC SDU in the MSG4 in step 409. In addition, the MSG4 in step 410 is scrambled by using the scrambling identifier carried in step 403.

Step 411: The user equipment sends the MSG5 to the signal source base station.

The MSG5 from the user equipment needs to pass through a signal extension system, is not processed in the signal extension system, and is directly transparently transmitted to the signal source base station.

Based on the foregoing solution, after the signal extension system is introduced, the proxy base station sends the correct timing advance to the user equipment, so that the user equipment can complete the time synchronization with the signal source base station based on the timing advance, and normal communication between the user equipment and the signal source base station is ensured.

FIG. 5 is a schematic diagram of another communication method according to an embodiment of this application. The method is applied to an application scenario in which a user equipment in RRC connected mode initiates contention-free random access.

In a formal access process, the user equipment initiates the random access to a proxy base station. A contention-free random access process includes only a MSG1 and a MSG2, and the user equipment does not need to obtain a scrambling identifier either. The proxy base station may send a timing advance to the user equipment via the MSG2.

In this scenario, the formal access process of the user equipment includes the following steps.

Step 501: The user equipment sends a MSG1 to the proxy base station, where the MSG1 includes a random access preamble (Random Access Preamble).

A preamble set is generated by a physical layer. RRC on a signal source base station side allocates some or all preamble index values for contention-based random access, and broadcasts the index values to the user equipment via system information.

APRACH physical channel resource (for example, a quantity and time-frequency positions of PRACHs) required for the random access of the user equipment is also broadcast by a signal source base station to the user equipment via a system message.

Step 502: The proxy base station sends a MSG2 to the user equipment, that is, sends a random access response (RAR).

The proxy base station blindly detects the preamble on a PRACH. If the proxy base station obtains the preamble through detection, the proxy base station feeds back the random access response on a PDSCH within a random access response window subsequently.

The MSG2 includes at least the timing advance.

For a definition of the timing advance and a method for determining the timing advance, refer to the related descriptions of step 302 in the embodiment corresponding to FIG. 3. Details are not described again.

The user equipment sends uplink data or uplink signaling in advance based on the timing advance, to offset a delay between the user equipment and a source base station, and implement time synchronization between the user equipment and the signal source base station.

Step 503: The proxy base station sends a second message to a proxy device, where the second message includes the random access preamble (preamble), and the second message indicates the proxy device to initiate random access to the signal source base station based on the preamble.

Because the user equipment expects to access the signal source base station, the signal source base station needs to sense the access of the user equipment. Therefore, after sending the MSG2 to the user equipment, the proxy base station notifies the proxy device to immediately use a same preamble to access the signal source base station within next random access occasion window. That is, the preamble in step 503 is the same as the preamble in step 501.

In an implementation method, that the second message indicates the proxy device to initiate the random access to the signal source base station based on the preamble specifically includes: The second message itself may indicate the proxy device to initiate the random access to the signal source base station based on the preamble. For example, a name of the second message may indicate the proxy device to initiate the random access to the signal source base station based on the preamble. In another implementation method, that the second message indicates the proxy device to initiate the random access to the signal source base station based on the preamble specifically includes: The second message includes second indication information, and the second indication information indicates the proxy device to initiate the random access to the signal source base station based on the preamble.

Step 504: The proxy device sends a MSG1 to the signal source base station, where the MSG1 includes the random access preamble (Random Access Preamble).

The preamble in step 504 is the same as the preamble in step 501.

Step 505: The signal source base station sends a MSG2 to the proxy device, that is, sends a random access response.

The signal source base station blindly detects the preamble on a PRACH. If the signal source base station obtains the preamble through detection, the signal source base station feeds back the random access response on a PDSCH within a random access response window subsequently.

Based on the foregoing solution, after a signal extension system is introduced, the proxy base station sends the correct timing advance to the user equipment, so that the user equipment can complete the time synchronization with the signal source base station based on the timing advance, and normal communication between the user equipment and the signal source base station is ensured.

It should be noted that an uplink grant (UL Grant) of a MSG3 may be further carried in step 502. If the proxy base station receives the MSG3 from the user equipment, in a processing method, the proxy base station may send the MSG3 to the user equipment, and then the user equipment copies a MAC SDU in the MSG3 to a new MSG3 after step 505, and sends the new MSG3 to the signal source base station. In another processing method, the proxy base station may alternatively not make a feedback response to the user equipment after receiving the MSG3. Consequently, the user equipment retransmits a MSG3 to the proxy base station. After the user equipment performs retransmission a plurality of times but receives no feedback response, the user equipment actively initiates a scheduling request (Scheduling Request, SR), so that the signal source base station can respond to the scheduling request of the user equipment by using the proxy device, to perform uplink scheduling.

The solutions provided in this application are described above mainly from a perspective of interaction between network elements. It may be understood that, to implement the foregoing functions, each network element includes a corresponding hardware structure and/or software module for executing each function. A person skilled in the art should be quite easily aware that, in combination with the examples described in embodiments disclosed in this specification, units, algorithms, and steps can be implemented by hardware or a combination of hardware and computer software in the present invention. Whether a function is performed by hardware or hardware driven by computer software depends on particular applications and design constraints of the technical solutions. A person skilled in the art may use different methods to implement the functions for each particular application, but it should not be considered that the implementation goes beyond the scope of the present invention.

It may be understood that, in the foregoing method embodiments, a corresponding step or operation implemented by the user equipment may alternatively be implemented by a component (for example, a chip or a circuit) configured in the user equipment. A corresponding step or operation implemented by the proxy device may alternatively be implemented by a component (for example, a chip or a circuit) configured in the proxy device. A corresponding step or operation implemented by the proxy base station may alternatively be implemented by a component (for example, a chip or a circuit) configured in the proxy base station. A corresponding step or operation implemented by the signal source base station may alternatively be implemented by a component (for example, a chip or a circuit) configured in the signal source base station.

Embodiments of this application further provide an apparatus configured to implement any one of the foregoing methods. For example, embodiments of this application provide an apparatus including units (or means) configured to implement the steps performed by the user equipment in any one of the foregoing methods. For example, embodiments of this application provide an apparatus including units (or means) configured to implement the steps performed by the proxy device in any one of the foregoing methods. For example, embodiments of this application provide an apparatus including units (or means) configured to implement the steps performed by the proxy base station in any one of the foregoing methods. For example, embodiments of this application provide an apparatus including units (or means) configured to implement the steps performed by the signal source base station in any one of the foregoing methods.

FIG. 6 is a schematic diagram of a communication apparatus according to an embodiment of this application. The apparatus is configured to implement corresponding steps performed by the proxy base station in the method embodiments in FIG. 2 to FIG. 5. As shown in FIG. 6, the apparatus 600 includes a receiving unit 610 and a sending unit 620.

The receiving unit 610 is configured to receive a MSG1 from a user equipment. The sending unit 620 is configured to send a MSG2 to the user equipment in response to the MSG1, where the MSG2 includes a timing advance, and the timing advance is determined based on at least one of an internal processing delay of a signal extension system and a delay between the signal extension system and a signal source base station.

In a possible implementation method, the receiving unit 610 is further configured to: before receiving the MSG1 from the user equipment, receive a scrambling identifier and a key radio resource control RRC information element from a proxy device, where the scrambling identifier and the key RRC information element are from the signal source base station, and the scrambling identifier is a cell radio network temporary identifier C-RNTI or a temporary cell radio network temporary identifier TC-RNTI. The MSG2 further includes the scrambling identifier. The receiving unit 610 is further configured to receive a MSG3 from the user equipment after the sending unit 620 sends the MSG2 to the user equipment. The sending unit 620 is further configured to send a MSG4 to the user equipment in response to the MSG3, where the MSG4 includes the key RRC information element.

In a possible implementation method, the receiving unit 610 is further configured to: before receiving the MSG1 from the user equipment, receive a scrambling identifier from a proxy device, where the scrambling identifier is from the signal source base station, and the scrambling identifier is a C-RNTI or a TC-RNTI. The MSG2 further includes the scrambling identifier. The receiving unit 610 is further configured to: after the sending unit 620 sends the MSG2 to the user equipment, receive a MSG3 from the user equipment, where the MSG3 includes a first medium access control MAC service data unit SDU. The sending unit 620 is further configured to send a first message to the proxy device, where the first message includes the first MAC SDU, and the first message indicates the proxy device to initiate random access to the signal source base station based on the first MAC SDU. The receiving unit 610 is further configured to receive a second MAC SDU from the user equipment, where the second MAC SDU is from the signal source base station. The sending unit 620 is further configured to send a MSG4 to the user equipment, where the MSG4 includes the second MAC SDU.

In a possible implementation method, the first message further includes first indication information. That the first message indicates the proxy device to initiate random access to the signal source base station based on the first MAC SDU includes: The first indication information indicates the proxy device to initiate the random access to the signal source base station based on the first MAC SDU.

In a possible implementation method, the MSG1 includes a random access preamble. The sending unit 620 is further configured to: after sending the MSG2 to the user equipment, send a second message to a proxy device, where the second message includes the random access preamble, and the second message indicates the proxy device to initiate random access to the signal source base station based on the random access preamble.

In a possible implementation method, the second message further includes second indication information. That the second message indicates the proxy device to initiate random access to the signal source base station based on the random access preamble includes: The second indication information indicates the proxy device to initiate the random access to the signal source base station based on the random access preamble.

In a possible implementation method, the communication apparatus and the proxy device are integrated into a same board, and the board is coupled to the signal extension system; the communication apparatus and the proxy device are respectively integrated into two boards, and the two boards are separately coupled to the signal extension system; or the communication apparatus and the proxy device each are a hardware module independent of the signal extension system, and the communication apparatus and the proxy device separately communicate with the signal extension system in a wired or wireless connection manner.

In a possible implementation method, the signal extension system is a digital indoor distributed system, a repeater, or a digital DAS.

It may be understood that the foregoing units may also be referred to as modules, circuits, or the like, and the foregoing units may be independently disposed, or may be all or partially integrated. The receiving unit 610 and the sending unit 620 may also be referred to as a communication interface.

Optionally, the communication apparatus 600 may further include a storage unit. The storage unit is configured to store data or instructions (which may also be referred to as code or a program). The foregoing units may interact with or be coupled to the storage unit, to implement a corresponding method or function. For example, a processing unit may read the data or the instructions in the storage unit, so that the communication apparatus implements the methods in the foregoing embodiments.

It should be understood that division into the units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, the steps in the foregoing methods or the foregoing units may be implemented by using a hardware integrated logic circuit in a processor element, or may be implemented in the form of software invoked by the processing element.

In an example, any one of the foregoing units in the apparatus may be one or more integrated circuits configured to implement the foregoing methods, for example, one or more application specific integrated circuits (Application Specific Integrated Circuit, ASIC), one or more microprocessors (digital signal processor, DSP), one or more field programmable gate arrays (Field Programmable Gate Array, FPGA), or a combination of at least two of the integrated circuit forms. For another example, when the units in the apparatus may be implemented in a form of a program invoked by a processing element, the processing element may be a general-purpose processor, for example, a central processing unit (Central Processing Unit, CPU) or another processor that can invoke the program. For another example, the units may be integrated and implemented in a form of a system-on-a-chip (system-on-a-chip, SOC).

The foregoing receiving unit 610 is an interface circuit of the apparatus, and is configured to receive a signal from another apparatus. For example, when the apparatus is implemented by using a chip, the receiving unit 610 is an interface circuit used by the chip to receive a signal from another chip or apparatus. The foregoing sending unit 620 is an interface circuit of the apparatus, and is configured to send a signal to the another apparatus. For example, when the apparatus is implemented by using the chip, the sending unit 620 is an interface circuit used by the chip to send a signal to the another chip or apparatus.

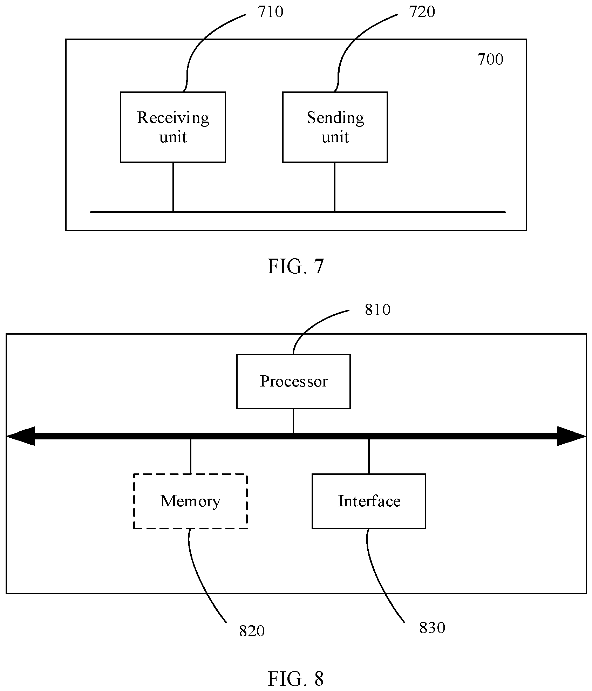

FIG. 7 is a schematic diagram of a communication apparatus according to an embodiment of this application. The apparatus is configured to implement corresponding steps performed by the user equipment in the method embodiments in FIG. 3 to FIG. 5. As shown in FIG. 7, the apparatus 700 includes a receiving unit 710 and a sending unit 720.

The sending unit 720 is configured to send a MSG1 to a proxy base station. The receiving unit 710 is configured to receive a MSG2 from the proxy base station, where the MSG2 includes a timing advance, and the timing advance is determined based on at least one of an internal processing delay of a signal extension system and a delay between the signal extension system and a signal source base station.

In a possible implementation method, the MSG2 further includes a C-RNTI. The sending unit 720 is further configured to send a MSG3 to the proxy base station after the receiving unit 710 receives the MSG2 from the proxy base station. The receiving unit 710 is further configured to receive a MSG4 from the proxy base station, where the MSG4 includes a key RRC information element.

In a possible implementation method, the sending unit 720 is further configured to send a MSG5 to the signal source base station by using the signal extension system after the receiving unit 710 receives the MSG4 from the proxy base station.

In a possible implementation method, the signal extension system is a digital indoor distributed system, a repeater, or a digital DAS.

It may be understood that the foregoing units may also be referred to as modules, circuits, or the like, and the foregoing units may be independently disposed, or may be all or partially integrated. The receiving unit 710 and the sending unit 720 may also be referred to as a communication interface.

Optionally, the communication apparatus 700 may further include a storage unit. The storage unit is configured to store data or instructions (which may also be referred to as code or a program). The foregoing units may interact with or be coupled to the storage unit, to implement a corresponding method or function. For example, a processing unit may read the data or the instructions in the storage unit, so that the communication apparatus implements the methods in the foregoing embodiments.

It should be understood that division into the units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, the steps in the foregoing methods or the foregoing units may be implemented by using a hardware integrated logic circuit in a processor element, or may be implemented in the form of software invoked by the processing element.

In an example, any one of the foregoing units in the apparatus may be one or more integrated circuits configured to implement the foregoing methods, for example, one or more ASICs, one or more D SPs, one or more FPGAs, or a combination of at least two of the integrated circuit forms. For another example, when the units in the apparatus may be implemented in a form of a program invoked by a processing element, the processing element may be a general-purpose processor, for example, a CPU or another processor that can invoke the program. For another example, the units may be integrated and implemented in a form of a SOC.

The foregoing receiving unit 710 is an interface circuit of the apparatus, and is configured to receive a signal from another apparatus. For example, when the apparatus is implemented by using a chip, the receiving unit 710 is an interface circuit used by the chip to receive a signal from another chip or apparatus. The foregoing sending unit 720 is an interface circuit of the apparatus, and is configured to send a signal to the another apparatus. For example, when the apparatus is implemented by using the chip, the sending unit 720 is an interface circuit used by the chip to send a signal to the another chip or apparatus.

FIG. 8 is a schematic diagram of a structure of a proxy base station according to an embodiment of this application. The proxy base station is configured to implement the operations of the proxy base station in the embodiments in FIG. 2 to FIG. 5. As shown in FIG. 8, the proxy base station includes a processor 810 and an interface 830, and optionally, further includes a memory 820. The interface 830 is configured to communicate with another device.

The methods performed by the proxy base station in the foregoing embodiments may be implemented by the processor 810 by invoking a program stored in a memory (which may be the memory 820 in the proxy base station, or may be an external memory). That is, an apparatus used for a proxy base station may include the processor 810, and the processor 810 invokes the program in the memory, to perform the methods performed by the proxy base station in the foregoing method embodiments. The processor herein may be an integrated circuit having a signal processing capability, for example, a CPU. The apparatus used for the proxy base station may be implemented by one or more integrated circuits configured to implement the foregoing methods, for example, one or more ASICs, one or more microprocessors DSPs, one or more FPGAs, or a combination of at least two of the integrated circuit forms. Alternatively, the foregoing implementations may be referenced.

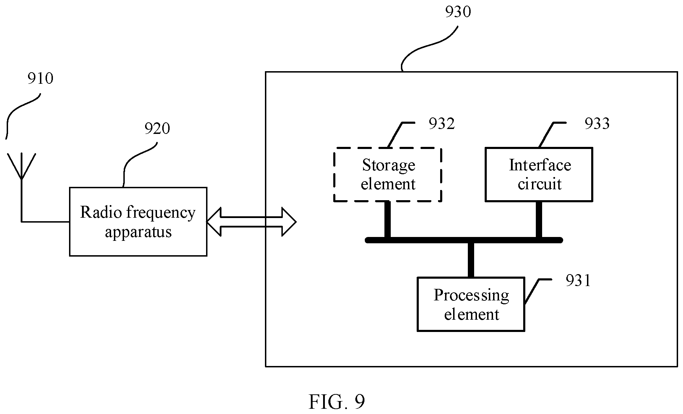

FIG. 9 is a schematic diagram of a structure of a user equipment according to an embodiment of this application. The user equipment is configured to implement the operations of the user equipment in the embodiments in FIG. 3 to FIG. 5. As shown in FIG. 9, the user equipment includes an antenna 910, a radio frequency apparatus 920, and a signal processing part 930. The antenna 910 is connected to the radio frequency apparatus 920. In a downlink direction, the radio frequency apparatus 920 receives, through the antenna 910, information sent by a signal source base station or a proxy base station, and sends, to the signal processing part 930 for processing, the information sent by the signal source base station or the proxy base station. In an uplink direction, the signal processing part 930 processes information about the user equipment, and sends processed information to the radio frequency apparatus 920. The radio frequency apparatus 920 processes the information about the user equipment, and then sends processed information to the signal source base station or the proxy base station through the antenna 910.

The signal processing part 930 is configured to process each communication protocol layer of data. The signal processing part 930 may be a subsystem of the user equipment, and the user equipment may further include another subsystem, for example, a central processing subsystem configured to process an operating system and an application layer that are of the user equipment, and for another example, a peripheral subsystem configured to implement a connection to another device. The signal processing part 930 may be a separately disposed chip. Optionally, the foregoing apparatus may be located in the signal processing part 930.

The signal processing part 930 may include one or more processing elements 931, for example, include a main control CPU and another integrated circuit, and include an interface circuit 933. In addition, the signal processing part 930 may further include a storage element 932. The storage element 932 is configured to store data and a program. A program for performing the methods performed by the user equipment in the foregoing methods may be stored in the storage element 932, or may not be stored in the storage element 932, for example, stored in a memory outside the signal processing part 930 and loaded by the signal processing part 930 into a cache for use. The interface circuit 933 is configured to communicate with an apparatus. The foregoing apparatus may be located in the signal processing part 930. The signal processing part 930 may be implemented by using a chip. The chip includes at least one processing element and an interface circuit. The processing element is configured to perform the steps in any one of the foregoing methods performed by the user equipment. The interface circuit is configured to communicate with another apparatus. In an implementation, units that implement the steps in the foregoing methods may be implemented in a form of a program invoked by a processing element. For example, the apparatus includes a processing element and a storage element. The processing element invokes a program stored in the storage element, to perform the methods performed by the user equipment in the foregoing method embodiments. The storage element may be a storage element located on a same chip as the processing element, namely, an on-chip storage element.

In another implementation, the program for performing the methods performed by the user equipment in the foregoing methods may be in a storage element located on a chip different from a chip on which the processing element is located, namely, an off-chip storage element. In this case, the processing element invokes or loads the program from the off-chip storage element to an on-chip storage element, to invoke and perform the methods performed by the user equipment in the foregoing method embodiments.

In still another implementation, the units of the user equipment that implement the steps in the foregoing methods may be configured as one or more processing elements. The processing elements are disposed on the signal processing part 930. The processing element herein may be an integrated circuit, for example, one or more ASICs, one or more DSPs, one or more FPGAs, or a combination of these types of integrated circuits. The integrated circuits may be integrated together to form a chip.

The units that implement the steps in the foregoing methods may be integrated together and implemented in a form of a SOC, and the SOC chip is configured to implement the foregoing methods. At least one processing element and a storage element may be integrated into the chip, and the processing element invokes a program stored in the storage element to implement the foregoing methods performed by the user equipment. Alternatively, at least one integrated circuit may be integrated into the chip, to implement the foregoing methods performed by the user equipment. Alternatively, with reference to the foregoing implementations, functions of some units may be implemented in a form of a program invoked by a processing element, and functions of some units may be implemented by in a form of an integrated circuit.

It can be learned that the foregoing apparatus may include at least one processing element and an interface circuit. The at least one processing element is configured to perform any method performed by the user equipment provided in the foregoing method embodiments. The processing element may perform, in a first manner, to be specific, by invoking a program stored in a storage element, some or all steps performed by the user equipment; may perform, in a second manner, to be specific, by using a hardware integrated logic circuit in a processor element in combination with instructions, some or all steps performed by the user equipment; or may certainly perform, by combining the first manner and the second manner, some or all steps performed by the user equipment.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuit forms. The storage element may be one memory, or may be a general term of a plurality of storage elements.

With reference to the foregoing descriptions, this application further provides the following embodiments.

Embodiment 1: A communication method, including:
receiving, by a proxy base station, a MSG1 from a user equipment; and
sending, by the proxy base station, a MSG2 to the user equipment in response to the MSG1, where the MSG2 includes a timing advance, and the timing advance is determined based on at least one of an internal processing delay of a signal extension system and a delay between the signal extension system and a signal source base station.

Embodiment 2: The method according to Embodiment 1, where before the receiving, by a proxy base station, a MSG1 from a user equipment, the method further includes:
receiving, by the proxy base station, a scrambling identifier and a key radio resource control RRC information element from a proxy device, where the scrambling identifier and the key RRC information element are from the signal source base station, and the scrambling identifier is a cell radio network temporary identifier C-RNTI or a temporary cell radio network temporary identifier TC-RNTI;
the MSG2 further includes the scrambling identifier; and
after the sending, by the proxy base station, a MSG2 to the user equipment, the method further includes:
   receiving, by the proxy base station, a MSG3 from the user equipment; and
   sending, by the proxy base station, a MSG4 to the user equipment in response to the MSG3, where the MSG4 includes the key RRC information element.

Embodiment 3: The method according to Embodiment 1, where before the receiving, by a proxy base station, a MSG1 from a user equipment, the method further includes:
receiving, by the proxy base station, a scrambling identifier from a proxy device, where the scrambling identifier is from the signal source base station, and the scrambling identifier is a C-RNTI or a TC-RNTI;
the MSG2 further includes the scrambling identifier; and
after the sending, by the proxy base station, a MSG2 to the user equipment, the method further includes:
   receiving, by the proxy base station, a MSG3 from the user equipment, where the MSG3 includes a first medium access control MAC service data unit SDU;
   sending, by the proxy base station, a first message to the proxy device, where the first message includes the first MAC SDU, and the first message indicates the proxy device to initiate random access to the signal source base station based on the first MAC SDU;
   receiving, by the proxy base station, a second MAC SDU from the user equipment, where the second MAC SDU is from the signal source base station; and
   sending, by the proxy base station, a MSG4 to the user equipment, where the MSG4 includes the second MAC SDU.

Embodiment 4: The method according to Embodiment 3, where the first message further includes first indication information; and
that the first message indicates the proxy device to initiate random access to the signal source base station based on the first MAC SDU includes:
the first indication information indicates the proxy device to initiate the random access to the signal source base station based on the first MAC SDU.

Embodiment 5: The method according to Embodiment 1, where the MSG1 includes a random access preamble; and
after the sending, by the proxy base station, a MSG2 to the user equipment, the method further includes:
sending, by the proxy base station, a second message to a proxy device, where the second message includes the random access preamble, and the second message indicates the proxy device to initiate random access to the signal source base station based on the random access preamble.

Embodiment 6: The method according to Embodiment 5, where the second message further includes second indication information; and
that the second message indicates the proxy device to initiate random access to the signal source base station based on the random access preamble includes:
the second indication information indicates the proxy device to initiate the random access to the signal source base station based on the random access preamble.

Embodiment 7: The method according to any one of Embodiments 2 to 6, where the proxy base station and the proxy device are integrated into a same board, and the board is coupled to the signal extension system;
the proxy base station and the proxy device are respectively integrated into two boards, and the two boards are separately coupled to the signal extension system; or
the proxy base station and the proxy device each are a hardware module independent of the signal extension system, and the proxy base station and the proxy device separately communicate with the signal extension system in a wired or wireless connection manner.

Embodiment 8: The method according to any one of Embodiments 1 to 7, where the signal extension system is a digital indoor distributed system, a repeater, or a digital DAS.

Embodiment 9: A communication method, including:
sending, by a user equipment, a MSG1 to a proxy base station; and
receiving, by the user equipment, a MSG2 from the proxy base station, where the MSG2 includes a timing advance, and the timing advance is determined based on at least one of an internal processing delay of a signal extension system and a delay between the signal extension system and a signal source base station.

Embodiment 10: The method according to Embodiment 9, where the MSG2 further includes a C-RNTI; and after the receiving, by the user equipment, a MSG2 from the proxy base station, the user equipment sends a MSG3 to the proxy base station; and the user equipment receives a MSG4 from the proxy base station, where the MSG4 includes a key RRC information element.

Embodiment 11: The method according to Embodiment 9 or 10, where after the user equipment receives the MSG4 from the proxy base station, the user equipment sends a MSG5 to the signal source base station by using the signal extension system.

Embodiment 12: The method according to any one of Embodiments 9 to 11, where the signal extension system is a digital indoor distributed system, a repeater, or a digital DAS.

Embodiment 13: A communication system, including: a proxy base station and a proxy device, where the proxy device is a device that replaces a user equipment to initiate random access to a signal source base station; and
the proxy base station is configured to: receive a MSG1 from the user equipment; and send a MSG2 to the user equipment in response to the MSG1, where the MSG2 includes a timing advance, and the timing advance is determined based on at least one of an internal processing delay of a signal extension system and a delay between the signal extension system and the signal source base station.

Embodiment 14: The system according to Embodiment 13, where the proxy device is configured to: receive a scrambling identifier and a key radio resource control RRC information element from the signal source base station; and send the scrambling identifier and the key RRC information element to the proxy base station, where the scrambling identifier is a cell radio network temporary identifier C-RNTI or a temporary cell radio network temporary identifier TC-RNTI;
the MSG2 further includes the scrambling identifier; and
the proxy base station is further configured to: after sending the MSG2 to the user equipment, receive a MSG3 from the user equipment; and send a MSG4 to the user equipment in response to the MSG3, where the MSG4 includes the key RRC information element.

Embodiment 15: The system according to Embodiment 13, where the proxy device is configured to: receive a scrambling identifier from the signal source base station; and send the scrambling identifier to the proxy base station, where the scrambling identifier is a C-RNTI or a TC-RNTI;
the MSG2 further includes the scrambling identifier; and
the proxy base station is further configured to: after sending the MSG2 to the user equipment, receive a MSG3 from the user equipment, where the MSG3 includes a first medium access control MAC service data unit SDU; and send a first message to the proxy device, where the first message includes the first MAC SDU, and the first message indicates the proxy device to initiate the random access to the signal source base station based on the first MAC SDU;
the proxy device is further configured to: send the first MAC SDU to the signal source base station, receive a second MAC SDU from the signal source base station, and send the second MAC SDU to the proxy base station; and
the proxy base station is further configured to: receive the second MAC SDU from the user equipment; and send a MSG4 to the user equipment, where the MSG4 includes the second MAC SDU.

Embodiment 16: The system according to Embodiment 15, where the first message further includes first indication information; and
that the first message indicates the proxy device to initiate the random access to the signal source base station based on the first MAC SDU includes:
the first indication information indicates the proxy device to initiate the random access to the signal source base station based on the first MAC SDU.

Embodiment 17: The system according to Embodiment 13, where the MSG1 includes a random access preamble;
the proxy base station is further configured to: after sending the MSG2 to the user equipment, send a second message to the proxy device, where the second message includes the random access preamble, and the second message indicates the proxy device to initiate the random access to the signal source base station based on the random access preamble; and
the proxy device is configured to initiate the random access to the signal source base station based on the random access preamble.

Embodiment 18: The system according to Embodiment 17, where the second message further includes second indication information; and
that the second message indicates the proxy device to initiate the random access to the signal source base station based on the random access preamble includes:
the second indication information indicates the proxy device to initiate the random access to the signal source base station based on the random access preamble.

Embodiment 19: The system according to any one of Embodiments 13 to 18, where the proxy base station and the proxy device are integrated into a same board, and the board is coupled to the signal extension system;
the proxy base station and the proxy device are respectively integrated into two boards, and the two boards are separately coupled to the signal extension system; or
the proxy base station and the proxy device each are a hardware module independent of the signal extension system, and the proxy base station and the proxy device separately communicate with the signal extension system in a wired or wireless connection manner.

Embodiment 20: The system according to any one of Embodiments 13 to 19, where the signal extension system is a digital indoor distributed system, a repeater, or a digital DAS.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that the term "and/or" describes an association relationship between associated objects, and represents that three relationships may exist. For example, A and/or B may represent the following three cases: Only A exists, both A and B exist, and only B exists. The character "/" generally indicates an "or" relationship between the associated objects. "At least one" means one or more.

The various illustrative logical units and circuits in embodiments of this application may implement or operate the functions by using a general-purpose processor, a digital signal processor, an application specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

In one or more example designs, the foregoing functions in this application may be implemented by using hardware, software, firmware, or any combination thereof. If the functions are implemented by using the software, the functions may be stored in a computer-readable medium or are transmitted to the computer-readable medium in a form of one or more instructions or code. Computer-readable media include a computer storage medium and a communication medium that enables a computer program to move from one place to another. The storage medium may be an available medium that may be accessed by any general-purpose or special computer. For example, such a computer-readable medium may include but is not limited to a RAM, a ROM, an EEPROM, a CD-ROM, or another optical disc storage, a disk storage or another magnetic storage apparatus, or any other medium that may be for bearing or storing program code, where the program code is in a form of instructions or a data structure and in a form that can be read by a general-purpose or special computer or a general-purpose or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, and microwave, the software is included in a defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data in a magnetic manner, and the disk usually optically copies data in a laser manner. The foregoing combination may also be included in the computer-readable medium.

A person skilled in the art should be aware that in the foregoing one or more examples, functions described in this application may be implemented by using hardware, software, firmware, or any combination thereof. When the functions are implemented by using the software, the functions may be stored in a computer-readable medium or transmitted as one or more instructions or code in the computer-readable medium. Computer-readable media include a computer storage medium and a communication medium. The communication medium includes any medium that enables a computer program to be transmitted from one place to another. The storage medium may be any available medium accessible to a general-purpose or special-purpose computer.

Although this application is described with reference to specific features and embodiments thereof, obviously, various modifications and combinations may be made to them without departing from the spirit and scope of this application. Correspondingly, the specification and accompanying drawings are merely example descriptions of this application defined by the appended claims, and are considered as covering any of or all modifications, variations, combinations, or equivalents within the scope of this application. Obviously, a person skilled in the art can make various modifications and variations to this application without departing from the scope of this application. This application is intended to cover these modifications and variations of this application provided that they fall within the scope of protection of the claims of this application and their equivalent technologies.

## Claims

1. A communication method, comprising:
receiving, by a proxy base station, a message 1 MSG1 from a user equipment; and
sending, by the proxy base station, a message 2 MSG2 to the user equipment in response to the MSG1, wherein the MSG2 comprises a timing advance, and the timing advance is determined based on at least one of an internal processing delay of a signal extension system and a delay between the signal extension system and a signal source base station.

2. The method according to claim 1, wherein before the receiving, by a proxy base station, a MSG1 from a user equipment, the method further comprises:
receiving, by the proxy base station, a scrambling identifier and a key radio resource control RRC information element from a proxy device, wherein the scrambling identifier and the key RRC information element are from the signal source base station, and the scrambling identifier is a cell radio network temporary identifier C-RNTI or a temporary cell radio network temporary identifier TC-RNTI;
the MSG2 further comprises the scrambling identifier; and
after the sending, by the proxy base station, a MSG2 to the user equipment, the method further comprises:
receiving, by the proxy base station, a message 3 MSG3 from the user equipment; and
sending, by the proxy base station, a message 4 MSG4 to the user equipment in response to the MSG3, wherein the MSG4 comprises the key RRC information element.

3. The method according to claim 1, wherein before the receiving, by a proxy base station, a MSG1 from a user equipment, the method further comprises:
receiving, by the proxy base station, a scrambling identifier from a proxy device, wherein the scrambling identifier is from the signal source base station, and the scrambling identifier is a C-RNTI or a TC-RNTI;
the MSG2 further comprises the scrambling identifier; and
after the sending, by the proxy base station, a MSG2 to the user equipment, the method further comprises:
receiving, by the proxy base station, a MSG3 from the user equipment, wherein the MSG3 comprises a first medium access control MAC service data unit SDU;
sending, by the proxy base station, a first message to the proxy device, wherein the first message comprises the first MAC SDU, and the first message indicates the proxy device to initiate random access to the signal source base station based on the first MAC SDU;
receiving, by the proxy base station, a second MAC SDU from the user equipment, wherein the second MAC SDU is from the signal source base station; and
sending, by the proxy base station, a MSG4 to the user equipment, wherein the MSG4 comprises the second MAC SDU.

4. The method according to claim 3, wherein the first message further comprises first indication information; and that the first message indicates the proxy device to initiate random access to the signal source base station based on the first MAC SDU comprises:
the first indication information indicates the proxy device to initiate the random access to the signal source base station based on the first MAC SDU.

5. The method according to claim 1, wherein the MSG1 comprises a random access preamble; and
after the sending, by the proxy base station, a MSG2 to the user equipment, the method further comprises:
sending, by the proxy base station, a second message to a proxy device, wherein the second message comprises the random access preamble, and the second message indicates the proxy device to initiate random access to the signal source base station based on the random access preamble.

6. The method according to claim 5, wherein the second message further comprises second indication information; and
that the second message indicates the proxy device to initiate random access to the signal source base station based on the random access preamble comprises:
the second indication information indicates the proxy device to initiate the random access to the signal source base station based on the random access preamble.

7. The method according to any one of claims 2 to 6, wherein the proxy base station and the proxy device are integrated into a same board, and the board is coupled to the signal extension system;
the proxy base station and the proxy device are respectively integrated into two boards, and the two boards are separately coupled to the signal extension system; or
the proxy base station and the proxy device each are a hardware module independent of the signal extension system, and the proxy base station and the proxy device separately communicate with the signal extension system in a wired or wireless connection manner.

8. The method according to any one of claims 1 to 7, wherein the signal extension system is a digital indoor distributed system, a repeater, or a digital distributed antenna system DAS.

9. A communication method, comprising:
sending, by a user equipment, a message 1 MSG1 to a proxy base station; and
receiving, by the user equipment, a message 2 MSG2 from the proxy base station, wherein the MSG2 comprises a timing advance, and the timing advance is determined based on at least one of an internal processing delay of a signal extension system and a delay between the signal extension system and a signal source base station.

10. The method according to claim 9, wherein the MSG2 further comprises a cell radio network temporary identifier C-RNTI; and
after the receiving, by the user equipment, a MSG2 from the proxy base station, the method further comprises:
sending, by the user equipment, a message 3 MSG3 to the proxy base station; and
receiving, by the user equipment, a message 4 MSG4 from the proxy base station, wherein the MSG4 comprises a key radio resource control RRC information element.

11. The method according to claim 10, wherein after the receiving, by the user equipment, a MSG4 from the proxy base station, the method further comprises:
sending, by the user equipment, a message 5 MSG5 to the signal source base station by using the signal extension system.

12. The method according to any one of claims 9 to 11, wherein
the signal extension system is a digital indoor distributed system, a repeater, or a digital distributed antenna system DAS.

13. A communication apparatus, comprising:
a receiving unit, configured to receive a message 1 MSG1 from a user equipment; and
a sending unit, configured to send a message 2 MSG2 to the user equipment in response to the MSG1, wherein the MSG2 comprises a timing advance, and the timing advance is determined based on at least one of an internal processing delay of a signal extension system and a delay between the signal extension system and a signal source base station.

14. The communication apparatus according to claim 13, wherein the receiving unit is further configured to: before receiving the MSG1 from the user equipment, receive a scrambling identifier and a key radio resource control RRC information element from a proxy device, wherein the scrambling identifier and the key RRC information element are from the signal source base station, and the scrambling identifier is a cell radio network temporary identifier C-RNTI or a temporary cell radio network temporary identifier TC-RNTI;
the MSG2 further comprises the scrambling identifier;
the receiving unit is further configured to receive a message 3 MSG3 from the user equipment after the sending unit sends the MSG2 to the user equipment; and
the sending unit is further configured to send a message 4 MSG4 to the user equipment in response to the MSG3, wherein the MSG4 comprises the key RRC information element.

15. The communication apparatus according to claim 13, wherein the receiving unit is further configured to: before receiving the MSG1 from the user equipment, receive a scrambling identifier from a proxy device, wherein the scrambling identifier is from the signal source base station, and the scrambling identifier is a C-RNTI or a TC-RNTI;
the MSG2 further comprises the scrambling identifier;
the receiving unit is further configured to: after the sending unit sends the MSG2 to the user equipment, receive a MSG3 from the user equipment, wherein the MSG3 comprises a first medium access control MAC service data unit SDU;
the sending unit is further configured to send a first message to the proxy device, wherein the first message comprises the first MAC SDU, and the first message indicates the proxy device to initiate random access to the signal source base station based on the first MAC SDU;
the receiving unit is further configured to receive a second MAC SDU from the user equipment, wherein the second MAC SDU is from the signal source base station; and
the sending unit is further configured to send a MSG4 to the user equipment, wherein the MSG4 comprises the second MAC SDU.

16. The communication apparatus according to claim 15, wherein the first message further comprises first indication information; and
that the first message indicates the proxy device to initiate random access to the signal source base station based on the first MAC SDU comprises:
the first indication information indicates the proxy device to initiate the random access to the signal source base station based on the first MAC SDU.

17. The communication apparatus according to claim 13, wherein the MSG1 comprises a random access preamble; and
the sending unit is further configured to: after sending the MSG2 to the user equipment, send a second message to a proxy device, wherein the second message comprises the random access preamble, and the second message indicates the proxy device to initiate random access to the signal source base station based on the random access preamble.

18. The communication apparatus according to claim 17, wherein the second message further comprises second indication information; and
that the second message indicates the proxy device to initiate random access to the signal source base station based on the random access preamble comprises:
the second indication information indicates the proxy device to initiate the random access to the signal source base station based on the random access preamble.

19. The communication apparatus according to any one of claims 14 to 18, wherein the communication apparatus and the proxy device are integrated into a same board, and the board is coupled to the signal extension system;
the communication apparatus and the proxy device are respectively integrated into two boards, and the two boards are separately coupled to the signal extension system; or
the communication apparatus and the proxy device each are a hardware module independent of the signal extension system, and the communication apparatus and the proxy device separately communicate with the signal extension system in a wired or wireless connection manner.

20. The communication apparatus according to any one of claims 13 to 19, wherein the signal extension system is a digital indoor distributed system, a repeater, or a digital distributed antenna system DAS.

21. A communication apparatus, comprising:
a sending unit, configured to send a message 1 MSG1 to a proxy base station; and
a receiving unit, configured to receive a message 2 MSG2 from the proxy base station, wherein the MSG2 comprises a timing advance, and the timing advance is determined based on at least one of an internal processing delay of a signal extension system and a delay between the signal extension system and a signal source base station.

22. The apparatus according to claim 21, wherein the MSG2 further comprises a cell radio network temporary identifier C-RNTI;
the sending unit is further configured to send a message 3 MSG3 to the proxy base station after the receiving unit receives the MSG2 from the proxy base station; and
the receiving unit is further configured to receive a message 4 MSG4 from the proxy base station, wherein the MSG4 comprises a key radio resource control RRC information element.

23. The apparatus according to claim 22, wherein the sending unit is further configured to send a message 5 MSG5 to the signal source base station by using the signal extension system after the receiving unit receives the MSG4 from the proxy base station.

24. The apparatus according to any one of claims 21 to 23, wherein
the signal extension system is a digital indoor distributed system, a repeater, or a digital distributed antenna system DAS.

25. A communication system, comprising: a proxy base station and a proxy device, wherein the proxy device is a device that replaces a user equipment to initiate random access to a signal source base station; and
the proxy base station is configured to: receive a MSG1 from the user equipment; and send a MSG2 to the user equipment in response to the MSG1, wherein the MSG2 comprises a timing advance, and the timing advance is determined based on at least one of an internal processing delay of a signal extension system and a delay between the signal extension system and the signal source base station.

26. The system according to claim 25, wherein the proxy device is configured to: receive a scrambling identifier and a key radio resource control RRC information element from the signal source base station; and send the scrambling identifier and the key RRC information element to the proxy base station, wherein the scrambling identifier is a cell radio network temporary identifier C-RNTI or a temporary cell radio network temporary identifier TC-RNTI;
the MSG2 further comprises the scrambling identifier; and
the proxy base station is further configured to: after sending the MSG2 to the user equipment, receive a MSG3 from the user equipment; and send a MSG4 to the user equipment in response to the MSG3, wherein the MSG4 comprises the key RRC information element.

27. The system according to claim 25, wherein the proxy device is configured to: receive a scrambling identifier from the signal source base station; and send the scrambling identifier to the proxy base station, wherein the scrambling identifier is a C-RNTI or a TC-RNTI;
the MSG2 further comprises the scrambling identifier;
the proxy base station is further configured to: after sending the MSG2 to the user equipment, receive a MSG3 from the user equipment, wherein the MSG3 comprises a first medium access control MAC service data unit SDU; and send a first message to the proxy device, wherein the first message comprises the first MAC SDU, and the first message indicates the proxy device to initiate the random access to the signal source base station based on the first MAC SDU;
the proxy device is further configured to: send the first MAC SDU to the signal source base station, receive a second MAC SDU from the signal source base station, and send the second MAC SDU to the proxy base station; and
the proxy base station is further configured to: receive the second MAC SDU from the user equipment; and send a MSG4 to the user equipment, wherein the MSG4 comprises the second MAC SDU.

28. The system according to claim 27, wherein the first message further comprises first indication information; and
that the first message indicates the proxy device to initiate the random access to the signal source base station based on the first MAC SDU comprises:
the first indication information indicates the proxy device to initiate the random access to the signal source base station based on the first MAC SDU.

29. The system according to claim 25, wherein the MSG1 comprises a random access preamble;
the proxy base station is further configured to: after sending the MSG2 to the user equipment, send a second message to the proxy device, wherein the second message comprises the random access preamble, and the second message indicates the proxy device to initiate the random access to the signal source base station based on the random access preamble; and
the proxy device is configured to initiate the random access to the signal source base station based on the random access preamble.

30. The system according to claim 29, wherein the second message further comprises second indication information; and
that the second message indicates the proxy device to initiate the random access to the signal source base station based on the random access preamble comprises:
the second indication information indicates the proxy device to initiate the random access to the signal source base station based on the random access preamble.

31. The system according to any one of claims 25 to 30, wherein the proxy base station and the proxy device are integrated into a same board, and the board is coupled to the signal extension system;
the proxy base station and the proxy device are respectively integrated into two boards, and the two boards are separately coupled to the signal extension system; or
the proxy base station and the proxy device each are a hardware module independent of the signal extension system, and the proxy base station and the proxy device separately communicate with the signal extension system in a wired or wireless connection manner.

32. The system according to any one of claims 25 to 31, wherein the signal extension system is a digital indoor distributed system, a repeater, or a digital distributed antenna system DAS.

33. A computer-readable storage medium, wherein the computer-readable storage medium stores a program; and when the program is invoked by a processor, the method according to any one of claims 1 to 12 is performed.

34. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 8 or the method according to any one of claims 9 to 12.

35. A communication apparatus, comprising a processor and an interface, wherein
the processor is configured to control the communication apparatus to perform the method according to any one of claims 1 to 8 or the method according to any one of claims 9 to 12; and
the processor is further configured to control the interface to communicate with another apparatus.

36. A computer program product, wherein when the computer program product runs on a processor, the processor is enabled to perform the method according to any one of claims 1 to 12.

37. A chip system, comprising a processor, wherein the processor is configured to perform the method according to any one of claims 1 to 12.
